# EUROPÄISCHE PATENTSCHRIFT

(11) **EP 2 559 331 B1**
(45) Veröffentlichungstag und Bekanntmachung des Hinweises auf die Patenterteilung: **11.03.2015**
(21) Anmeldenummer: 12005590.0
(22) Anmeldetag: 01.08.2012
(51) Int. Cl.: A01C 17/00, A01C 21/00

(54) **Zweischeibendüngerstreuer**
Two disc manure spreader
Semoir à engrais à double disque

(30) Priorität: 18.08.2011 DE 102011110607
(43) Veröffentlichungstag der Anmeldung: 20.02.2013
(73) Patentinhaber: RAUCH Landmaschinenfabrik GmbH, 76547 Sinzheim (DE)
(72) Erfinder: Stöcklin, Volker, M.Sc., 77975 Ringsheim (DE); Rauch, Norbert, Dr., 76547 Sinzheim (DE); Dingeldey, Nico, 64397 Modautal (DE)
(74) Vertreter: Lasch, Hartmut

(56) Entgegenhaltungen:
- EP-A2- 0 282 812
- EP-B1- 0 963 690
- US-A1- 2011 017 847

## Beschreibung

Die Erfindung betrifft einen Zweischeibendüngerstreuer mit einem mechanischen, hydraulischen oder elektrischen Antriebsstrang für den Antrieb der Verteilerscheiben, wenigstens einem Mittel zum Einstellen des Streuers auf verschiedene Arbeitsbreiten und Streugüter und/oder Verteilarten und einem einstellbaren Dosierorgan für jede Verteilerscheibe, das von einem rechnergesteuerten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom regelbar ist, wobei ein Sensor für die Aufnahme des Leerlaufdrehmoments bei geschlossenen Dosierschiebern und unbelasteter Verteilerscheibe und das Gesamtdrehmoment bei Belastung der Verteilerscheibe mit dem Sollmassenstrom gemessen und zur Bestimmung des durch den Düngermassenstrom bewirkten Drehmoments das Leerlaufdrehmoment vom Gesamtdrehmoment abgezogen wird.

Die Funktion eines Zweischeibendüngerstreuers lässt sich im Wesentlichen in die Dosierung des Düngermassenstroms auf die jeweilige Verteilerscheibe und die Verteilung des Düngers durch die Verteilerscheiben aufteilen. Damit kommt der Messung des Düngermassenstroms eine große Bedeutung zu.

Für die Düngerdosierung hat sich zur Messung und Regelung des Düngermassenstroms die Drehmomentenmesstechnik eingeführt. Dieses System hat sich bisher sehr erfolgreich bei hydraulisch angetriebenen Zweischeibendüngerstreuern im Markt bewährt (Prospekt RAUCH-AXERA-H EMC). Neben dem hydraulischen Antrieb werden künftig auch mechanische und elektrische Antriebe an Bedeutung gewinnen, die mittels der Drehmomentenmesstechnik den Düngermassenstrom messen und regeln.

In der EP 0 963 690 B1 und in der vorangemeldeten, zum Prioritätsdatum der vorliegenden Anmeldung noch nicht veröffentlichten DE 10 2011 018 490.2 sind mehrere Vorschläge für eine mechanische, hydraulische und elektrische Drehmomentenmessung bei Zweischeibendüngerstreuern zur Ermittlung des Düngermassenstroms pro Verteilerscheibe unterbreitet. Das grundsätzliche Funktionsprinzip lässt sich in die Messung des Leerlaufdrehmoments bei unbeaufschlagter Last durch den Düngermassenstrom und des Gesamtdrehmoments bei beaufschlagter Last durch den Düngermassenstrom aufteilen. Zur Ermittlung des durch den Düngermassenstrom bewirkten Drehmoments muss vom Gesamtdrehmoment während der Streuarbeit das vorher bei geschlossenem Dosierschieber (= kein Düngermassenstrom) ermittelte Leerlaufdrehmoment abgezogen werden.

Da das Gesamtdrehmoment bei sehr kleinen Düngermassenströmen (kleine Dosiermenge, z.B. 80 kg/ha; kleine Arbeitsbreite, z.B. 12 m; kleine Fahrgeschwindigkeit, z.B. 8 km/h) nur geringfügig von dem Leerlaufdrehmoment der unbeaufschlagten Last auf die Verteilerscheibe abweicht, ist die präzise Erfassung des momentanen Leerlaufdrehmoments eine wichtige Voraussetzung für die Präzision des Gesamtsystems. In der Praxis hat sich gezeigt, dass es hierbei immer wieder zu Störungen kommt. Untersuchungen haben ergeben, dass aufgrund von Veränderungen des Widerstandes im Antriebsstrang (Ölviskosität, Kugellagerreibwiderstand, Eigenspannungsveränderungen, etc.) sich das Leerlaufdrehmoment während der Streuarbeit verändert und dies zu einer Fehlmessung des Gesamtdrehmoments und dadurch zu Fehldosierungen führt. Dies kann vermieden werden, indem in kurzen Zeitabschnitten wiederholt Leerlaufdrehmoment-Messungen während der Streuarbeit durchgeführt werden. Dies ist allerdings außerordentlich umständlich und unerwünscht, da die Streuarbeit jedes Mal unterbrochen werden muss, die Dosierschieber geschlossen werden müssen und in der Regel auch mit der Traktor-/ Düngerstreuerkombination angehalten werden muss.

Es ist Aufgabe der Erfindung, die Präzision des Massenstromregelsystems für Düngerstreuer durch eine präzise Erfassung des Leerlaufdrehmoments zu erhöhen, ohne die Streuarbeit unnötigerweise unterbrechen zu müssen.

Diese Aufgabe wird erfindungsgemäße bei einem Zweischeibenstreuer der eingangs genannten Art dadurch gelöst, dass im Antriebsstrang wenigstens ein Temperatursensor angeordnet ist, wobei bei jeder Leerlaufmessung die Temperatur oder Temperaturen der Antriebsstränge gemessen und diesem Leerlaufdrehmoment zugeordnet und abgespeichert werden.

Es hat sich basierend auf Erfahrungen und Versuchen gezeigt, dass die Veränderung der Temperatur des Antriebsstrangs einen hohen Einfluss auf den Widerstand des Antriebsstrangs hat. Insbesondere bei sehr niedrigen Außentemperaturen während der durchaus üblichen Streuarbeit im Winter ist das Leerlaufdrehmoment viel höher als bei höheren Außentemperaturen. Durch den Wärmeeintrag durch Reibung, Ölerwärmung oder Erwärmung des elektrischen oder hydraulischen Motors und/oder des Getriebes verändert sich das Leerlaufdrehmoment sehr stark. Ab einer höheren Temperatur von ca. 25°C verändert sich das Leerlaufdrehmoment kaum noch. Hier setzt die Erfindung mit ihrem Vorschlag an, indem bei jeder Leerlaufmessung die Temperatur oder Temperaturen des Antriebsstrangs gemessen und diesen Leerlaufdrehmomenten zugeordnet und abgespeichert werden.

Auf diese Weise kann durch Hochschalten eines Fensters in einer Maske des Bedienterminals entweder zu einer Messung des Leerlaufdrehmoments oder zu mehreren Messungen des Leerlaufdrehmoments in zeitlichen Abständen aufgefordert werden, bis eine Temperatur von ca. 25° erreicht wird, und/oder das rechnergestützte Regelgerät kann insbesondere, wie weiter unten noch näher erläutert, aufgrund der gemessenen Temperatur auf das Leerlaufdrehmoment schließen.

Gemäß einem Ausführungsbeispiel der Erfindung ist vorgesehen, dass in dem Antriebsstrang jeder Verteilerscheibe ein Temperatursensor angeordnet ist. Da das Gesamtdrehmoment ebenfalls pro Verteilerscheibe gemessen wird, ist es auch hilfreich, wenn pro Antriebsstrang zu der jeweiligen Verteilerscheibe ein Temperatursensor integriert ist.

Bei einem z.B. mechanischen Antrieb werden vorzugsweise die Öltemperatur des Getriebes und/oder die Temperatur des Getriebegehäuses und/oder die Temperatur einer Antriebskomponente mit einem oder mehreren Temperatursensoren gemessen. Sie sind repräsentativ für das Temperaturverhalten des Antriebs im Hinblick auf die Drehmomentenmessung.

Bei einem mechanischen Antrieb kann im Bedarfsfall ferner vorteilhafterweise eine Heizung des Getriebes und/oder des Getriebeöls integriert sein, mit deren Hilfe die Mindesttemperatur und damit die korrekte Betriebsbedingung schneller erreicht wird.

Bei einem hydraulischen Antrieb werden vorzugsweise die Hydrauliköltemperatur und/oder die Temperatur des Hydraulikmotorgehäuses und/oder die Temperatur einer Antriebskomponente mit einem oder mehreren Temperatursensoren gemessen.

Bei einem mechanisch-hydraulischen Antrieb mit Zwischengetriebe zwischen Hydraulikmotor und Verteilerscheibe werden vorzugsweise die Öltemperatur des Hydrauliköls und/oder die Temperatur des Getriebegehäuses und/oder die Temperatur des Getriebeöls und/oder die Temperatur einer Antriebskomponente mit einem oder mehreren Temperatursensoren gemessen.

Bei einem mechanisch-elektrischen Antrieb mit Zwischengetriebe zwischen Elektromotor und Verteilerscheibe des Zweischeibendüngerstreuers, wie er z.B. aus der DE 10 2010 020 551.6 bekannt ist, wird vorzugsweise die Elektromotortemperatur und/oder die Getriebegehäusetemperatur und/oder die Temperatur des Getriebeöls und/öder die Temperatur einer Antriebskomponente mit einem oder mehreren Temperatursensoren gemessen.

Die Temperatur wird vorzugsweise in der Traktorkabine angezeigt. Hierzu kann ein getrenntes, nur die Temperatur anzeigendes Messgerät oder das ohnehin vorhandene elektronische Bedienterminal in der Traktorkabine dienen.

In der Maske des elektronischen Bedienterminals kann insbesondere ein sich automatisch hochschaltendes Fenster die Temperatur anzeigen, solange eine Temperatur von unter ca. 25°C vorliegt.

Zur weiteren Sicherung der präzisen Dosierung kann es sinnvoll sein, wenn unterhalb einer hinterlegten Temperatur, wie insbesondere der Mindesttemperatur von ca. 25°C, sich die Dosierschieber nicht öffnen lassen.

Unterhalb der hinterlegten Temperatur, wie der Mindesttemperatur von ca. 25°C, wird vorzugsweise das Warmlaufen des Antriebs durch Hochschalten eines Fensters in der Maske des Bedienterminals so lange empfohlen, bis diese erreicht ist.

Während der Streuarbeit wird in vorteilhafter Ausgestaltung in Abhängigkeit von einer bestimmten Temperaturveränderung (Temperaturabfall) gegenüber der abgespeicherten Temperatur der letzten Leerlaufdrehmomentenmessung zur erneuten Leerlaufdrehmomentenmessung durch Hochschalten eines Fensters in der Bedienmaske aufgefordert. Hiermit wird erreicht, dass nur z.B. im Winter zu mehreren Leerlaufmessungen aufgefordert wird, z.B. auch nach der Wiederbefüllung des Düngerstreuers, das eventuell einige Zeit erfordert, wobei sich der Antrieb wieder abgekühlt hat.

Gemäß einem vorteilhaften Ausführungsbeispiels ist ferner vorgesehen, dass in einer Rechnereinheit eine Korrelation zwischen der Temperatur/den Temperaturen und dem Leerlaufdrehmoment hinterlegt ist und das Leerlaufdrehmoment automatisch aufgrund der Temperaturmessungen korrigiert wird. Darüber hinaus kann vorteilhaferweise vorgesehen sein, dass in einer Rechnereinheit während der Streuarbeit mittels der durchgeführten Leerlaufmessungen eine Korrelation zwischen der gemessenen Temperatur/den Temperaturen und dem gemessenen Leerlaufdrehmoment automatisch erstellt und das Leerlaufdrehmoment automatisch aufgrund der Temperaturmessungen korrigiert wird. Demnach kann entweder werksseitig eine Temperatur-Leerlaufdrehmomentkennlinie eingespeichert sein oder während des Arbeitsbetriebs bei den erforderlichen, sich wiederholenden Leerlaufmessungen eine Temperatur-Leerlaufdrehmomentkennlinie in der Regelelektronik sich automatisch aufbauen, wobei bei zukünftiger Streuarbeit mittels der Messung der Temperatur auf das Leerlaufdrehmoment geschlossen und dieses rechnerisch berücksichtigt werden kann, ohne eine neuerliche Leerlaufdrehmomentmessung durchführen zu müssen.

## Patentansprüche

1. Zweischeibendüngerstreuer mit einem mechanischen, hydraulischen oder elektrischen Antriebsstrang für den Antrieb der Verteilerscheiben, wenigstens einem Mittel zum Einstellen des Streuers auf verschiedene Arbeitsbreiten und Streugüter und/oder Verteilarten und einem einstellbaren Dosierorgan für jede Verteilerscheibe, das von einem rechnergesteuerten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom regelbar ist, wobei ein Sensor für die Aufnahme des Leerlaufdrehmoments bei geschlossenen Dosierschiebern und unbelasteter Verteilerscheibe und das Gesamtdrehmoment bei Belastung der Verteilerscheibe mit dem Sollmassenstrom gemessen und zur Bestimmung des durch den Düngermassenstrom bewirkten Drehmoments das Leerlaufdrehmoment vom Gesamtdrehmoment abgezogen wird, **dadurch gekennzeichnet, dass** im Antriebsstrang wenigstens ein Temperatursensor angeordnet ist, wobei bei jeder Leerlaufmessung die Temperatur oder Temperaturen der Antriebsstränge gemessen und diesem Leerlaufdrehmoment zugeordnet und abgespeichert werden.

2. Zweischeibendüngerstreuer nach Anspruch 1, **dadurch gekennzeichnet, dass** durch Hochschalten eines Fensters in einer Maske des Bedienterminals zur Messung des Leerlaufdrehmoments oder zu mehreren Messungen des Leerlaufdrehmoments in zeitlichen Abständen aufgefordert wird, bis eine Temperatur von ca. 25° erreicht ist.

3. Zweischeibendüngerstreuer nach Anspruch 1 oder 2, **dadurch gekennzeichnet, dass** das rechnergestützte Regelgerät aufgrund der gemessenen Temperatur auf das Leerlaufdrehmoment schließt.

4. Zweischeibendüngerstreuer nach einem der Ansprüche 1 bis 3, **dadurch gekennzeichnet, dass** in dem Antriebsstrang jeder Verteilerscheibe ein Temperatursensor angeordnet ist.

5. Zweischeibendüngerstreuer nach einem der Ansprüche 1 bis 4, **dadurch gekennzeichnet, dass** bei einem mechanischen Antrieb die Öltemperatur des Getriebes und/oder des Getriebegehäuses und/oder einer Antriebskomponente mit einem oder mehreren Temperatursensoren gemessen werden.

6. Zweischeibendüngerstreuer nach einem der Ansprüche 1 bis 5, **dadurch gekennzeichnet, dass** bei einem mechanischen Antrieb eine Heizung des Getriebes und/oder des Getriebeöls integriert ist.

7. Zweischeibendüngerstreuer nach Anspruch 1, **dadurch gekennzeichnet, dass** bei einem hydraulischen Antrieb die Hydrauliköltemperatur und/oder die Temperatur des Hydraulikmotorgehäuses und/oder die Temperatur einer Antriebskomponente mit einem oder mehreren Temperatursensoren gemessen werden.

8. Zweischeibendüngerstreuer nach Anspruch 1, **dadurch gekennzeichnet, dass** bei einem mechanisch-hydraulischen Antrieb mit Zwischengetriebe zwischen Hydraulikmotor und Verteilerscheibe die Öltemperatur des Hydrauliköls und/oder die Temperatur des Getriebegehäuses und/oder die Temperatur des Getriebeöls und/oder die Temperatur einer Antriebskomponente mit einem oder mehreren Temperatursensoren gemessen werden.

9. Zweischeibendüngerstreuer nach Anspruch 1, **dadurch gekennzeichnet, dass** bei einem mechanisch-elektrischen Antrieb mit Zwischengetriebe zwischen Elektromotor und Verteilerscheibe die Temperatur des Elektromotors und/oder die Temperatur des Getriebegehäuses und/oder die Temperatur des Getriebeöls und/oder die Temperatur einer Antriebskomponente mit einem oder mehreren Temperatursensoren gemessen werden.

10. Zweischeibendüngerstreuer nach einem der Ansprüche 1 bis 9, **dadurch gekennzeichnet, dass** die Temperatur in der Traktorkabine angezeigt wird.

11. Zweischeibendüngerstreuer nach Anspruch 10, **dadurch gekennzeichnet, dass** die Temperatur in einem Bedienterminal in der Traktorkabine angezeigt wird.

12. Zweischeibendüngerstreuer nach einem der Ansprüche 1 bis 11, **dadurch gekennzeichnet, dass** in einer sich automatisch hochschaltenden Maske des Bedienterminal die Temperatur angezeigt wird, solange die Temperatur unter 25°C beträgt.

13. Zweischeibendüngerstreuer nach einem der Ansprüche 1 bis 12, **dadurch gekennzeichnet, dass** unterhalb einer hinterlegten Temperatur sich die Dosierschieber nicht öffnen lassen.

14. Zweischeibendüngerstreuer nach einem der Ansprüche 1 bis 13, **dadurch gekennzeichnet, dass** unterhalb einer hinterlegten Temperatur das Warmlaufen des Antriebs durch Hochschalten eines Fensters in einer Maske des Bedienterminals empfohlen wird, bis diese erreicht ist.

15. Zweischeibendüngerstreuer nach einem der Ansprüche 1 bis 14, **dadurch gekennzeichnet, dass** während der Streuarbeit in Abhängigkeit von einer bestimmten Temperaturveränderung (Temperaturabfall) gegenüber der letzten Leerlaufdrehmomentmessung zur erneuten Leerlaufdrehmomentmessung durch Hochschalten eines Fensters in der Bedienmaske aufgefordert wird.

16. Zweischeibendüngerstreuer nach einem der Ansprüche 1 bis 15, **dadurch gekennzeichnet, dass** in einer Rechnereinheit eine Korrelation zwischen der Temperatur/den Temperaturen und dem Leerlaufdrehmoment hinterlegt ist und das Leerlaufdrehmoment automatisch aufgrund der Temperaturmessungen korrigiert wird.

17. Zweischeibendüngerstreuer nach einem der Ansprüche 1 bis 16, **dadurch gekennzeichnet, dass** in einer Rechnereinheit während der Streuarbeit mittels der durchgeführten Leerlaufmessungen eine Korrelation zwischen der gemessenen Temperatur/den Temperaturen und dem gemessenen Leerlaufdrehmoment automatisch erstellt und das Leerlaufdrehmoment automatisch aufgrund der Temperaturmessungen korrigiert wird.

## Claims

1. Twin-disc fertilizer spreader with a mechanical, hydraulic or electric drive train for driving the distributor discs, at least one means for setting the spreader to various working widths and spreading materials and/or types of distribution and an adjustable metering element for each distributor disc, which metering element can be controlled by a computer-controlled control unit, wherein the current velocity, the setpoint quantity for spreading per area and the working width can be input into the computer, and the metering element can be regulated with the setpoint mass flow calculated therefrom, wherein a sensor is provided for recording the idling torque in the case of closed metering valves and unloaded distributor disc and the entire torque when the distributor disc is loaded with the setpoint mass flow are measured and the idling torque is subtracted from the total torque in order to determine the torque which is caused by the fertilizer mass flow, **characterized in that** at least one temperature sensor is arranged in the drive train, wherein during each idling mode measurement the temperature or temperatures of the drive trains are measured and are assigned to this idling torque and stored.

2. Twin-disc fertilizer spreader according to Claim 1, **characterized in that** by raising a window in a mask of the operator control terminal a request is made for measurement of the idling torque or a plurality of measurements of the idling torque at time intervals until a temperature of approximately 25° is reached.

3. Twin-disc fertilizer spreader according to Claim 1 or 2, **characterized in that** the computer-assisted control unit infers the idling torque on the basis of the measured temperature.

4. Twin-disc fertilizer spreader according to one of Claims 1 to 3, **characterized in that** a temperature sensor is arranged in the drive train of each distributor disc.

5. Twin-disc fertilizer spreader according to one of Claims 1 to 4, **characterized in that** in the case of a mechanical drive the oil temperature of the transmission and/or of the transmission housing and/or of a drive component is/are measured with one or more temperature sensors.

6. Twin-disc fertilizer spreader according to one of Claims 1 to 5, **characterized in that** in the case of a mechanical drive a means of heating the transmission and/or the transmission oil is integrated.

7. Twin-disc fertilizer spreader according to Claim 1, **characterized in that** in the case of a hydraulic drive the hydraulic oil temperature and/or the temperature of the hydraulic engine housing and/or the temperature of a drive component is/are measured with one or more temperature sensors.

8. Twin-disc fertilizer spreader according to Claim 1, **characterized in that** in the case of a mechanical-hydraulic drive with an intermediate transmission between the hydraulic motor and distributor disc the oil temperature of the hydraulic oil and/or the temperature of the transmission housing and/or the temperature of the transmission oil and/or the temperature of a drive component is/are measured with one or more temperature sensors.

9. Twin-disc fertilizer spreader according to Claim 1, **characterized in that** in the case of a mechanical-electrical drive with intermediate transmission between the electric motor and distributor disc the temperature of the electric motor and/or the temperature of the transmission housing and/or the temperature of the transmission oil and/or the temperature of a drive component is/are measured with one or more temperature sensors.

10. Twin-disc fertilizer spreader according to one of Claims 1 to 9, **characterized in that** the temperature is displayed in the tractor cab.

11. Twin-disc fertilizer spreader according to Claim 10, **characterized in that** the temperature is displayed in an operator control terminal in the tractor cab.

12. Twin-disc fertilizer spreader according to one of Claims 1 to 11, **characterized in that** in a mask of the operator control terminal, which is raised automatically the temperature is displayed as long as the temperature is below 25°C.

13. Twin-disc fertilizer spreader according to one of Claims 1 to 12, **characterized in that** the metering valves cannot be opened below a stored temperature.

14. Twin-disc fertilizer spreader according to one of Claims 1 to 13, **characterized in that** the warming up of the drive by raising a window in a mask of the operator control terminal is recommended below a stored temperature until said temperature is reached.

15. Twin-disc fertilizer spreader according to one of Claims 1 to 14, **characterized in that** during the spreading work a renewed idling torque measurement is requested by raising a window in the operator control mask as a function of a specific temperature change (drop in temperature) compared to the last idling torque measurement.

16. Twin-disc fertilizer spreader according to one of Claims 1 to 15, **characterized in that** in a computer unit a correlation between the temperature/temperatures and the idling torque is stored, and the idling torque is corrected automatically on the basis of the temperature measurements.

17. Twin-disc fertilizer spreader according to one of Claims 1 to 16, **characterized in that** in a computer unit a correlation between the measured temperature/temperatures and the measured idling torque is produced automatically during the spreading work by means of the idling measurements which are carried out, and the idling torque is corrected automatically on the basis of the temperature measurements.

## Revendications

1. Épandeur d'engrais à double disque équipé d'une chaîne cinématique mécanique, hydraulique ou électrique pour l'entraînement des disques de répartiteur, d'au moins un moyen de réglage de l'épandeur sur différentes largeurs de travail et produits à épandre et/ou types de répartition et d'un organe de dosage réglable pour chaque disque de répartiteur et pouvant être commandé par un appareil de réglage commandé par ordinateur, la vitesse de conduite réelle, la quantité d'épandage théorique par surface et la largeur de travail pouvant être entrées dans l'ordinateur et l'organe de dosage pouvant être réglé avec le débit massique théorique calculé à partir de là, un capteur étant présent pour l'enregistrement du couple de rotation au point mort lorsque les poussoirs de dosage sont fermés et le disque de répartiteur non sollicité et le couple de rotation total étant mesuré avec le débit massique théorique pour la charge du disque de répartiteur et pour déterminer le couple de rotation provoqué par le débit massique d'engrais, le couple de rotation au point mort étant soustrait au couple de rotation total, **caractérisé en ce qu'**au moins un capteur de température est disposé dans la chaîne cinématique, la température ou les températures des chaînes cinématiques étant mesurée(s) à chaque mesure au point mort et étant associée(s) et mémorisée(s) à ce couple de rotation au point mort.

2. Épandeur d'engrais à double disque selon la revendication 1, **caractérisé en ce que** le changement de vitesse vers une vitesse supérieure d'une fenêtre dans un masque du terminal de commande est demandé pour mesurer le couple de rotation au point mort ou pour réaliser plusieurs mesures du couple de rotation au point mort espacées dans le temps, jusqu'à ce qu'une température d'environ 25° soit atteinte.

3. Épandeur d'engrais à double disque selon la revendication 1 ou 2, **caractérisé en ce que** l'appareil de réglage conclut la présence d'un couple de rotation au point mort sur la base de la température mesurée.

4. Épandeur d'engrais à double disque selon l'une quelconque des revendications 1 à 3, **caractérisé en ce qu'**un capteur de température est disposé dans la chaîne cinématique de chaque disque de répartiteur.

5. Épandeur d'engrais à double disque selon l'une quelconque des revendications 1 à 4, **caractérisé en ce qu'**en cas d'entraînement mécanique, la température d'huile de la boîte de vitesses et/ou du carter de boîte de vitesses et/ou d'un composant d'entraînement est mesurée à l'aide d'un ou de plusieurs capteurs de température.

6. Épandeur d'engrais à double disque selon l'une quelconque des revendications 1 à 5, **caractérisé en ce qu'**un chauffage de la boîte de vitesses et/ou de l'huile de boîte de vitesses est intégré en cas d'entraînement mécanique.

7. Épandeur d'engrais à double disque selon la revendication 1, **caractérisé en ce qu'**en cas d'entraînement hydraulique, la température d'huile hydraulique et/ou la température du carter de moteur hydraulique et/ou la température d'un composant d'entraînement est mesurée à l'aide d'un ou de plusieurs capteurs de température.

8. Épandeur d'engrais à double disque selon la revendication 1, **caractérisé en ce qu'**en cas d'entraînement hydromécanique avec boîte de vitesses intermédiaire entre le moteur hydraulique et le disque de répartiteur, la température d'huile de l'huile hydraulique et/ou la température du carter de boîte de vitesses et/ou la température de l'huile de boîte de vitesses et/ou la température d'un composant d'entraînement est mesurée à l'aide d'un ou de plusieurs capteurs de température.

9. Épandeur d'engrais à double disque selon la revendication 1, **caractérisé en ce qu'**en cas d'entraînement électromécanique avec une boîte de vitesses intermédiaire entre le moteur électrique et le disque de répartiteur, la température du moteur électrique et/ou la température du carter de boîte de vitesses et/ou la température de l'huile de boîte de vitesses et/ou la température d'un composant d'entraînement est mesurée à l'aide d'un ou de plusieurs capteurs de température.

10. Épandeur d'engrais à double disque selon l'une quelconque des revendications 1 à 9, **caractérisé en ce que** la température est affichée dans la cabine de tracteur.

11. Épandeur d'engrais à double disque selon la revendication 10, **caractérisé en ce que** la température est affichée dans un terminal de commande prévu dans la cabine de tracteur.

12. Épandeur d'engrais à double disque selon l'une quelconque des revendications 1 à 11, **caractérisé en ce que** la température est affichée dans un masque, changeant automatiquement, du terminal de commande tant que la température est inférieure à 25 °C.

13. Épandeur d'engrais à double disque selon l'une quelconque des revendications 1 à 12, **caractérisé en ce que** le poussoir de dosage ne s'ouvre pas en dessous d'une température mémorisée.

14. Épandeur d'engrais à double disque selon l'une quelconque des revendications 1 à 13, **caractérisé en ce qu'**en dessous d'une température mémorisée, l'échauffement de l'entraînement est recommandé par changement de vitesse vers une vitesse supérieure d'une fenêtre dans un masque du terminal de commande, jusqu'à ce que ladite température soit atteinte.

15. Épandeur d'engrais à double disque selon l'une quelconque des revendications 1 à 14, **caractérisé en ce que** pendant l'épandage, on demande en fonction d'une variation définie de température (baisse de température) par rapport à la dernière mesure de couple de rotation au point mort une nouvelle mesure de couple de rotation au point mort par changement de vitesse vers une vitesse supérieure d'une fenêtre dans le masque de commande.

16. Épandeur d'engrais à double disque selon l'une quelconque des revendications 1 à 15, **caractérisé en ce qu'**une corrélation entre la température/les températures et le couple de rotation au point mort est mémorisée dans une unité informatique et que le couple de rotation au point mort est automatiquement corrigé sur la base des mesures de température.

17. Épandeur d'engrais à double disque selon l'une quelconque des revendications 1 à 16, **caractérisé en ce qu'**une corrélation entre la température mesurée/les températures mesurées et le couple de rotation au point mort mesuré est automatiquement établie dans une unité informatique pendant l'épandage à l'aide de la mesure au point mort réalisée et que le couple de rotation au point mort est automatiquement corrigé sur la base des mesures de température.
